# EUROPÄISCHE PATENTANMELDUNG

(11) **EP 2 298 634 A1**
(43) Veröffentlichungstag der Anmeldung: **23.03.2011**
(21) Anmeldenummer: 10174486.0
(22) Anmeldetag: 30.08.2010
(51) Int. Cl.: B62K 19/16, B29C 70/06

(54) **Fahrradrahmenelement sowie Sattelstützrohr**

(30) Priorität: 02.09.2009 DE 202009011856 U
(71) Anmelder: Canyon Bicycles GmbH, 56073 Koblenz (DE)
(72) Erfinder: Kaiser, Michael, 56073 Koblenz (DE)
(74) Vertreter: von Kreisler Selting Werner

(57) **Zusammenfassung**

Ein rohrförmiges Fahrradrahmenelement, wie insbesondere eine Fahrradgabel oder ein Fahrradstützrohr, sind aus Faserverbundwerkstoff hergestellt. Eine Vielzahl von Fasern (12, 14, 16) ist hierbei in ein Kunststoffmaterial eingebettet. Erfindungsgemäß ist ein Teil der Fasern als Biegefasern (12) ausgebildet. Diese verlaufen zu einer Längsrichtung (18) des rohrförmigen Elements, vorzugsweise in einem Winkel von 0° ± 25°. Um eine insbesondere vertikale Nachgiebigkeit des Rohrelements zu gewährleisten, weisen die Biegefasern eine Fasersteifigkeit von vorzugsweise weniger als 150 Gpa auf.

## Beschreibung

Die Erfindung betrifft ein rohrförmiges Fahrradrahmenelement, insbesondere eine Fahrradgabel, wobei die Erfindung auch auf andere rohrförmige Fahrradrahmenelemente, wie Kettenstreben, Sattelstützstreben, das Sattelrohr sowie auch das Ober- und Unterrohr angewendet werden kann. Ferner betrifft die Erfindung ein Sattelstützrohr für Fahrradsättel, wobei das Sattelstützrohr üblicherweise in dem Sattelrohr des Fahrradrahmens klemmend befestigbar ist.

Fahrradrahmenelemente und Sattelstützrohre werden bei modernen Fahrrädern, insbesondere bei Rennrädern, häufig aus Faserkunststoff-Verbundwerkstoffen hergestellt. Hierbei handelt es sich üblicherweise um Kohlefaser-Verbundwerkstoffe, Die Herstellung erfolgt durch das Übereinanderlegen und Laminieren mehrerer Einzelschichten, wobei die verwendeten Einzelschichten eine große Anzahl an unidirektional ausgerichteten Fasern aufweisen. Die Fasermaterialschichten sind bereits mit Kunststoffmaterial getränkt; es handelt sich hierbei um unidirektionale Prepregs mit Kohlefasern.

Die Anforderungen an rohrförmige Fahrradrahmenelemente sowie Sattelstützrohre sind sehr hoch. So müssen die entsprechenden Bauteile einerseits eine hohe Steifigkeit, andererseits aber auch eine gewisse Nachgiebigkeit aufweisen. So ist beispielsweise bei Sattelstützrohren gewünscht, dass diese eine gewisse vertikale Nachgiebigkeit aufweisen. Dies ist aus Gründen des Komforts sowie auch zur Erhöhung der Fahrstabilität wünschenswert. Andererseits müssen Sattelstützrohre eine hohe Verwindungssteifigkeit aufweisen. Diese Anforderungen werden auch an andere rohrförmige Fahrradrahmenelemente gestellt. Zusätzlich besteht bei einigen rohrförmigen Fahrradrahmenelementen, wie einer Fahrradgabel, die Anforderung einer hohen lateralen Steifigkeit. Dies bedeutet, dass bei einer in Fahrtrichtung seitlichen Belastung des entsprechenden Fahrradrahmenelements eine hohe Steifigkeit gegeben sein soll. Die laterale Steifigkeit sowie die Verwindungssteifigkeit ermöglichen eine hohe Energieumsetzung. Ferner wird hierdurch die Fahrstabilität erhöht. Eine hohe laterale Steifigkeit ist beispielsweise auch bei Kettenstreben und Sattelstützstreben wünschenswert.

Bekannte Kohlefaser-Verbundwerkstoffe, aus denen entsprechende Fahrradrahmenelemente und Sattelstützstreben hergestellt werden, weisen eine Vielzahl an Kohlenstofffasern auf. Hierbei ist ein Teil der Kohlenstofffasern im Wesentlichen in Längsrichtung bzw. parallel zur Rohrmittelachse angeordnet. Weitere Lagen an Kohlenstofffasermaterial sind kreuzweise in einem Winkel von 45° zur Längsrichtung angeordnet. Durch die gekreuzten, im Wesentlichen in einem Winkel von 45° zur Längsrichtung angeordneten Fasern wird eine hohe Verwindungs- bzw. Torsionssteifigkeit erzielt.

Aufgabe der Erfindung ist es, eine rohrförmiges Fahrradrahmenelement sowie ein Sattelstützrohr zu schaffen, das die auftretenden Anforderungen, insbesondere hinsichtlich der gewünschten Nachgiebigkeit und Steifigkeit, besser erfüllt.

Die Lösung der Aufgabe erfolgt durch ein rohrförmiges Fahrradrahmenelement, insbesondere eine Fahrradgabel gemäß Anspruch 1 bzw. ein Sattelstützrohr gemäß Anspruch 2.

Das erfindungsgemäße rohrförmige Fahrradrahmenelement, bei dem es sich insbesondere um eine Fahrradgabel handelt, ist aus Faserverbund-Werkstoff hergestellt. Bei dem Fahrradrahmenelement kann es sich auch um andere, insbesondere starken Kräften und Momenten ausgesetzten Teile, wie Kettenstreben, Sattelstützstreben, das Sattelrohr oder auch das Ober- oder Unterrohr handeln. Der Faserverbund-Werkstoff weist eine Vielzahl von Fasern auf, die in ein Kunststoffmaterial eingebettet sind. Erfindungsgemäß ist ein Teil der Fasern als Biegefasern ausgebildet. Die Biegefasern verlaufen im Wesentlichen in Längsrichtung des rohrförmigen Fahrradrahmenelements. Hierbei verlaufen die Biegefasern gegenüber der Längsrichtung in einem Winkelbereich von 0° ± 25°, vorzugsweise 0° ± 10° und besonders bevorzugt 0° ± 5°. Ferner sind die Biegefasern derart ausgebildet, dass eine erhöhte Nachgiebigkeit gegeben ist. Insbesondere Momente um eine Achse senkrecht zur Längsachse des rohrförmigen Fahrradelements bewirken eine zulässige und auch gewünschte Biegung des Fahrradrahmenelements. Eine derart aufgebaute Fahrradgabel weist somit eine erhöhte vertikale Nachgiebigkeit auf. Hierzu weist die Biegefaser erfindungsgemäß eine Fasersteifigkeit bzw. ein Zugmodul von weniger als 150 Gpa auf. Vorzugsweise ist die Fasersteifigkeit der Biegefaser < 100 Gpa und insbesondere < 80 Gpa.

Durch die erfindungsgemäß vorgesehenen, im Wesentlichen in Längsrichtung des Fahrradrahmenelements verlaufenden Biegefasern kann eine entsprechende, beispielsweise vertikale Nachgiebigkeit des Fahrradrahmenelements bei der Herstellung auf einfache Weise eingestellt werden. Es ist hierdurch auf einfache Weise möglich, insbesondere durch Auswahl der verwendeten Biegefasern, unterschiedliche Fahrradrahmenelemente mit unterschiedlicher Nachgiebigkeit herzustellen.

Hierzu ist es besonders bevorzugt, dass als die im Wesentlichen in Längsrichtung des Fahrradrahmenelements verlaufenden Biegefasern zumindest teilweise Glasfasern und/ oder Aramidfasern und/ oder Basaltfasern verwendet werden. Zur Definition der gewünschten Nachgiebigkeit können die unterschiedlichen Arten an Biegefasern auch gemischt werden. Ferner ist es möglich, Fasern unterschiedlicher Dicke zu verwenden. Ggf. ist ein Teil der Biegefasern beispielsweise weiterhin aus Kohlenstoff.

Um eine insbesondere lineare Elastizität, d.h. ein Zurückfedern, zu gewährleisten, ist es bevorzugt, dass die Biegefasern eine hohe Bruchdehnung von vorzugsweise mehr als 1,5 % und besonders bevorzugt mehr als 3 % aufweisen.

In besonders bevorzugter Ausführungsform sind zusätzlich zu den Biegefasern Torsionsfasern vorgesehen. Die Torsionsfasern sind, bezogen auf die Längsrichtung des Fahrradrahmenelements, vorzugsweise im Wesentlichen in einem Winkel von 45° angeordnet. Insbesondere sind die Torsionsfasern in einer Winkellage von 45° ± 25° und besonders bevorzugt 45° ±10°, insbesondere 45° ± 5° angeordnet. Die Torsionsfasern, durch die eine hohe Verwindungssteifigkeit des Elements realisiert wird, weisen eine Fasersteifigkeit bzw. ein Zugmodul von vorzugsweise mehr als 200 Gpa auf. Insbesondere ist die Fasersteifigkeit > 250 Gpa, besonders bevorzugt > 500 Gpa.

Insbesondere durch die in bevorzugter Ausführungsform erfindungsgemäße Kombination von im Wesentlichen in Längsrichtung verlaufenden Biegefasern und im Wesentlichen unter einem 45°-Winkel verlaufenden Torsionsfasern können Fahrradrahmenelemente realisiert werden, die einerseits eine hohe Verwindungssteifigkeit, andererseits aber eine insbesondere vertikale Nachgiebigkeit aufweisen. Hierdurch kann eine gute Energieumsetzung bei gleichzeitig hoher Stabilität und verbessertem Fahrkomfort erzielt werden.

Als Torsionsfasern werden vorzugsweise zumindest teilweise Kohlenstofffasern verwendet. Zur Einstellung der Verwindungssteifigkeit kann die Anzahl der Kohlenstofffasern sowie beispielsweise deren Dicke und Qualität variiert werden. Besonders bevorzugt ist es, dass die Torsionsfasern kreuzweise verlegt sind. Wenn die Torsionsfasern somit im Wesentlichen einen 45°-Winkel aufweisen, ist es besonders bevorzugt, dass, bezogen auf die Längsrichtung des Fahrradrahmenelements, zwei Arten an Torsionsfasern in jeweils 45° zur Längsrichtung angeordnet sind. Die Torsionsfasern kreuzen sich somit und weisen zueinander einen Winkel von etwa 90° auf.

Bei einer weiteren besonders bevorzugten Ausführungsform ist die Anordnung der Fasern derart gewählt, dass insbesondere eine vertikale Nachgiebigkeit gegeben ist, wobei diese insbesondere auf die Mittelebene des Fahrradrahmens bezogen ist. Beispielsweise bei einer Fahrradgabel ist eine derartige vertikale Nachgiebigkeit gewünscht, dass aufgrund von Momenten, die um eine Senkrechte zur Mittelebene des Fahrradrahmens auftreten, eine Biegung der Gabelrohr erfolgt. Fährt das Fahrrad beispielsweise über eine Bodenwelle, so wird diese zumindest teilweise durch ein Biegen der Gabelrohre abgefedert. Hierbei ist die Mittelebene die in Rahmenlängsrichtung vertikal verlaufende Ebene. Bezogen auf die Mittelebene ist es in besonders bevorzugter Ausführungsform bevorzugt, dass die Biegefasern ausschließlich in diesem Bereich angeordnet sind. Hierbei ist es bevorzugt, dass die Biegefasern, bezogen auf die Mittelebene, in einem Bereich von ± 45°, vorzugsweise ± 25° angeordnet sind. Handelt es sich bei dem Fahrradrahmenelement beispielsweise um eine Fahrradgabel, so sind die Biegefasern, bezogen auf die Fahrtrichtung, bei dieser bevorzugten Ausführungsform nur an der Vorder- und der Rückseite der Gabelrohre vorgesehen. In den übrigen Bereichen, in denen durchaus auch Fasern in Längsrichtung vorgesehen sein können, sind sodann Fasern mit höherer Steifigkeit, wie beispielsweise Kohlenstofffasern, angeordnet. Die Breite des Bereichs, in dem Biegefasern angeordnet sind, beträgt bei dieser bevorzugten Ausführungsform beispielsweise, bezogen auf die Mittelebene, ± 1 cm, insbesondere ± 1,5 cm in Umfangsrichtung.

Bevorzugt ist es bei dieser Ausführungsform, dass, bezogen auf die Fahrradlängsrichtung, seitlich Versteifungsfasern vorgesehen sind. Diese, insbesondere auch in Längsrichtung des Fahrradrahmenelements verlaufenden Fasern weisen eine höhere Fasersteifigkeit als die Biegefasern auf. Insbesondere beträgt die Steifigkeit dieser Fasern mehr als 200 Gpa, vorzugsweise mehr als 250 Gpa und besonders bevorzugt mehr als 500 Gpa. Insbesondere kann es sich bei diesen Fasern um Kohlenstofffasern handeln. Ferner ist es möglich, die seitlich vorgesehenen Fasern als Faserlagen aufzubringen. Insbesondere erfolgt dies durch streifenförmige Prepregs. Diese können ggf. auch zusätzlich zu den Biegefasern vorgesehen werden, wobei die Steifigkeit der seitlich vorgesehenen Versteifungsfasern sodann die Steifigkeit der Biegefasern überlagert. Diese seitlich angeordneten Versteifungsfasern sind somit bei einer Fahrradgabel an der Innen- und/ oder der Außenseite der Gabelrohre angeordnet. Insbesondere sind hierbei die Versteifungsfasern auch in die die beiden Gabelbeine verbindenden Gabelbrücke geführt. Insbesondere kann an der Innenseite der Fahrradgabel ein durchgehender Versteifungsstreifen, insbesondere aus Prepregmaterial, vorgesehen sein, der sich von der Innenseite eines Gabelbeins über die Unterseite der Gabelbrücke bis zur Innenseite des anderen Gabelbeins erstreckt. Hierbei erstrecken sich die Versteifungsfasern vorzugsweise bis zu den beiden Ausfallenden der Gabelbeine. Die an der Außenseite vorgesehenen Versteifungsfasern erstrecken sich vorzugsweise über die Gabelbrücke hinweg bis in den Gabelschaft.

Die vorstehend anhand eines rohrförmigen Fahrradrahmenelements, wie insbesondere einer Fahrradgabel, beschriebene Erfindung ist entsprechend auch bei einem Sattelstützrohr anwendbar. Ein Sattelstützrohr für Fahrradsättel, das üblicherweise in dem Sattelrohr des Fahrradrahmens klemmend gehalten ist, kann somit ebenfalls aus einer Vielzahl von Fasern hergestellt werden, die in Kunststoffmaterial eingebettet sind. Hierbei sind die Fasern erfindungsgemäß, wie vorstehend beschrieben, teilweise als Biegefasern und vorzugsweise zusätzlich teilweise als Torsionsfasern ausgebildet. Die Anordnung der Fasern erfolgt hierbei wie vorstehend anhand des Fahrradrahmelements erläutert.

Nachfolgend wird die Erfindung anhand bevorzugter Ausführungsformen näher erläutert.

Es zeigen:
- Fig. 1: eine schematische Seitenansicht eines rohrförmigen Fahrradrahmenelements bzw. eines Sattelstützrohrs,
- Fig. 2: eine vergrößerte Ansicht eines Bereichs II in Fig. 1, in dem schematisch die Fasern angedeutet sind,
- Fig. 3: eine Schnittansicht durch ein rundes Rahmenrohr entlang der Linie III-III in Fig. 1,
- Fig. 4: eine schematische Schnittansicht entsprechend Fig. 3, wobei es sich jedoch um ein ovales Rohrelement handelt,
- Fig. 5: eine schematische Draufsicht einer Fahrradgabel, und
- Fig. 6: eine schematische Schnittansicht entlang der Linie VI-VI in Fig. 5.

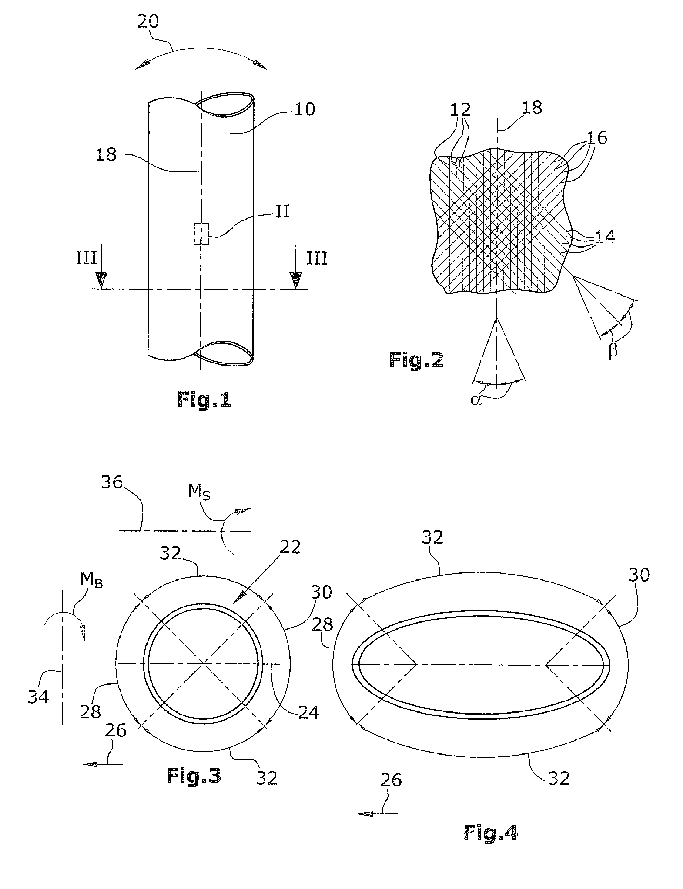

Ein rohrförmiges Fahrradrahmenelement 10 ist aus einer Vielzahl von Fasern hergestellt, die in Kunststoffmaterial eingebettet sind. Bei dem rohrförmigen Fahrradrahmenelement 10 kann es sich um ein Gabelbein, ein Sattelrohr, Kettenstreben oder dgl. handeln. Ebenso kann es sich bei dem in Fig. 1 dargestellten rohrförmigen Element um ein Sattelstützrohr handeln.

Zur erfindungsgemäßen Ausgestaltung des rohrförmigen Elements 10 weist dieses Biegefasern 12 und Torsionsfasern 14, 16 auf. Die Biegefasern 12 verlaufen idealerweise parallel zur Längsrichtung bzw. Mittelachse 18 des rohrförmigen Elements 10. Ebenso können die Biegefasern 12 zumindest teilweise in einem Winkel α von bis zu ± 25° zur Längsrichtung 18 verlaufen (Fig. 2). Bei den Biegefasern handelt es sich um Fasern geringerer Fasersteifigkeit und hoher Bruchdehnung.

Die Torsionsfasern 14, 16 sind idealerweise zur Längsrichtung jeweils in einem Winkel von 45° angeordnet. Die Torsionsfasern 14, 16 kreuzen sich somit und weisen zueinander einen Winkel von idealerweise 90° auf. Bezogen auf eine idealerweise in einem 45°-Winkel zur Längsrichtung 18 verlaufende Torsionsfaser können diese auch in einem Winkelbereich β von ± 25° angeordnet sein (Fig. 2).

Handelt es sich bei dem rohrförmigen Element 10 beispielsweise um ein Sattelstützrohr, so ist es bevorzugt, dass dieses eine hohe Verwindungssteifigkeit aufweist. Die hohe Verwindungssteifigkeit ist durch die erfindungsgemäße Anordnung der vorzugsweise aus Kohlenstoff bestehenden Torsionsfasern erzielt. Um eine vertikale Nachgiebigkeit, d.h. ein elastisches Federn des Sattelstützrohrs, zu ermöglichen, ist das Sattelstützrohr in Richtung eines Pfeils 20 (Fig. 1) elastisch biegbar. Hierzu sind die im Wesentlichen in Längsrichtung 18 vorgesehenen Biegefasern vorgesehen, die insbesondere aus Glasfaser und/ oder Aramidfaser und/ oder Basaltfaser hergestellt sind.

Ein Fahrradrahmenelement, wie beispielsweise ein Gabelbein einer Fahrradgabel, ist in besonders bevorzugter Ausführungsform derart ausgelegt, dass es eine hohe Torsions- bzw. Verwindungssteifigkeit, eine laterale Steifigkeit und eine vertikale Nachgiebigkeit aufweist. Ein derartiges Fahrradrahmenelement kann vorzugsweise, wie nachfolgend anhand Fig. 3 und Fig. 4 erläutert, ausgebildet sein.

Zunächst weist das Fahrradrahmenelement 22 (Fig. 3) Torsionsfasern 14, 16 auf, die, wie vorstehend anhand Fig. 2 erläutert, bezogen auf die Längsrichtung des Rahmenelements 10 in einem Winkel von 45° ± 25° verlaufen und sich kreuzen. Die Längsrichtung des Rohrelements 20 verläuft in Fig. 3 senkrecht zur Zeichenebene. Bezogen auf eine Mittelebene 24, bei der es sich um die in Längsrichtung des Fahrradrahmens verlaufende Vertikalebene handelt, weist das Rohrelement 22 einen in Fahrtrichtung 26 weisenden vorderen Bereich 28 sowie einen hinteren Bereich 30 auf. Bei dieser erfindungsgemäßen Ausführungsform sind in dem vorderen Bereich und im hinteren Bereich 28 Biegefasern angeordnet. Diese verlaufen im Wesentlichen parallel zur Längsrichtung, d.h. in einem Winkel von 0° ± 25°. Die Biegefasern verlaufen somit idealerweise in Fig. 3 senkrecht zur Zeichenebene. Hierbei handelt es sich um relativ weiche Fasern, die, wie vorstehend ausgeführt, eine entsprechende Biegung ermöglichen.

In den beiden in Fahrtrichtung seitlichen Bereichen 32 sind vorzugsweise keine Biegefasern vorgesehen. Anstatt der Biegefasern sind in diesem Bereich vorzugsweise relativ harte Fasern, wie beispielsweise Kohlenstofffasern, vorgesehen. Diese verlaufen wiederum im Wesentlichen parallel zur Längsrichtung 18, d.h. in einem Winkel von 0° ± 25° zur Längsrichtung 18. Ggf. können in den seitlichen Bereichen 32 auch entsprechend harte Fasern, wie Kohlenstofffasern, zusätzlich zu den Biegefasern vorgesehen sein.

Durch die erfindungsgemäße Anordnung von Fasern, wie anhand Fig. 3 erläutert, kann aufgrund der vorgesehenen Torsionsfasern ein Rahmenelement mit hoher Torsionssteifigkeit realisiert werden. Aufgrund des Vorsehens von Biegefasern in dem vorderen Bereich 28 sowie in dem hinteren Bereich 30 kann eine Nachgiebigkeit bzw. Flexibilität erzielt werden. Dies bedeutet, dass Momente M_{B} zu einer elastischen Verformung bzw. Verbiegung des rohrförmigen Elements führen. Bei den Momenten M_{B} handelt es sich um Momente, die um eine Senkrechte zur Mittelebene 24 angeordnete Achse 34 auftreten. Da in den seitlichen Bereichen 32 zumindest zusätzlich steife Fasern in Längsrichtung angeordnet sind, führen Momente M_{S} zu einer geringeren Verbiegung bzw. Verformung des rohrförmigen Elements 22. Bei den Momenten M_{S} handelt es sich um Momente, die um eine parallel zur Mittelebene 24 verlaufende Achse 36 wirken.

Anstelle eines rohrförmigen Rahmenelements, wie in Fig. 3 dargestellt, kann das Rahmenelement auch einen elliptischen oder ovalen Querschnitt (Fig. 4) aufweisen. Hierbei ist es wiederum bevorzugt, dass, bezogen auf eine Fahrtrichtung 26, in dem vorderen Bereich 28 und dem hinteren Bereich 30 Biegefasern angeordnet sind. In den dazwischen liegenden seitlichen Bereichen 32 sind wiederum vorzugsweise zusätzlich steife Fasern oder ausschließlich steife Fasern in Längsrichtung 18 angeordnet. Des Weiteren sind auch bei dieser Ausführungsform Torsionsfasern, wie anhand Fig. 2 beschrieben, vorgesehen.

Um die seitliche Steifigkeit zu erhöhen ist es möglich, anstatt des Vorsehens von steiferen Fasern in den seitlichen Bereichen 32 entsprechende Fasermatten oder streifenförmigen Prepregs 38 in diesen Bereichen anzuordnen.

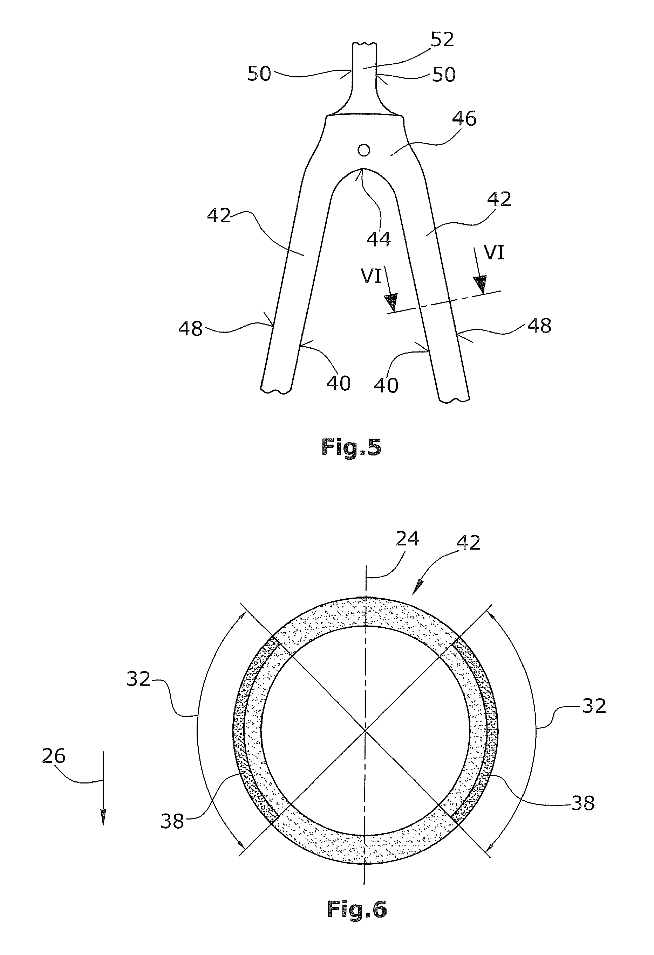

Insbesondere bei einer Fahrradgabel (Fig. 5, 6) ist das Vorsehen von streifenförmigen Prepregs 38 mit steiferen Fasern, wie Kohlestofffasern, vorteilhaft. Hierdurch ist eine einfache Herstellung möglich (Fig. 6). Insbesondere verlaufen die streifenförmigen Prepregs 38 entlang der beiden Innenseiten 40 der beiden Gabelrohre 42 sowie entlang einer Unterseite 44 der Gabelbrücke 46 (Fig. 5). Bevorzugt ist die Verwendung eines einzelnen durchgehenden Prepregs mit durchgehenden Fasern, der sich somit, ausgehend von einem Ausfallende eines ersten Gabelbeins, bis zum anderen Ausfallende erstreckt. An einer Außenseite 48 des Gabelbeins sind wiederum vorzugsweise streifenförmige Prepregs angeordnet, die sich bis in den Bereich einer Außenseite 50 eines Gabelschafts 52 erstrecken können.

Die erfindungsgemäße Ausgestaltung der Fahrradrahmenelemente bzw. des Sattelstützrohrs führt dazu, dass insbesondere eine gewünschte hohe Torsionssteifigkeit bei gleichzeitiger vertikaler Nachgiebigkeit erzielt werden kann. Ggf. kann zusätzlich eine hohe laterale Steifigkeit erzielt werden. Dies ist aufgrund der erfindungsgemäßen Kombination unterschiedlicher Fasern in unterschiedlichen Bereichen und unterschiedlichen Winkelanordnungen bei geringem Gewicht der entsprechenden Bauteile möglich.

## Patentansprüche

1. Rohrförmiges Fahrradrahmenelement, insbesondere Fahrradgabel aus Faserverbundwerkstoff, mit
einer Vielzahl von Fasern (12, 14, 16), die in ein Kunststoffmaterial eingebettet sind,
**dadurch gekennzeichnet, dass**
die Fasern Biegefasern (12) aufweisen, die zur Längsrichtung (18) des rohrförmigen Fahrradrahmenelements (10, 22) einen Winkel von 0° ± 25° aufweisen, und
eine Fasersteifigkeit von weniger als 150 Gpa aufweisen.

2. Sattelstützrohr aus Faserverbundwerkstoff für Fahrradsättel, mit
einer Vielzahl von Fasern (12, 14, 16), die in ein Kunststoffmaterial eingebettet sind,
**dadurch gekennzeichnet, dass**
die Fasern Biegefasern (12) aufweisen, die zur Längsrichtung (18) des Sattelstützrohrs (10) einen Winkel von 0° ± 25° aufweisen, und
eine Fasersteifigkeit von weniger als 150 Gpa aufweisen.

3. Fahrradrahmenelement oder Sattelstützrohr nach Anspruch 1 oder 2, **dadurch gekennzeichnet, dass** die Biegefasern (12) eine Bruchdehnung von mindestens 1,5 %, insbesondere mindestens 3 % aufweisen.

4. Fahrradrahmenelement oder Sattelstützrohr nach einem der Ansprüche 1 - 3, **dadurch gekennzeichnet, dass** die Biegefasern (12) eine Fasersteifigkeit von weniger als 100 Gpa, insbesondere weniger als 80 Gpa aufweisen.

5. Fahrradrahmenelement oder Sattelstützrohr nach einem der Ansprüche 1 - 4, **dadurch gekennzeichnet, dass** die Biegefasern (12) zumindest teilweise Glasfasern und/ oder Aramidfasern und/ oder Basaltfasern sind.

6. Fahrradrahmenelement oder Sattelstützrohr nach einem der Ansprüche 1 - 5, **dadurch gekennzeichnet, dass** die Biegefasern (12) zur Längsrichtung (18) einen Winkel von 0° ± 10°, insbesondere 0° ± 5° aufweisen.

7. Fahrradrahmenelement oder Sattelstützrohr nach einem der Ansprüche 1 - 6, **dadurch gekennzeichnet, dass** die Fasern Torsionsfasern (14, 16) aufweisen, die zur Längsrichtung (18) einen Winkel von 45° ± 25° und eine Fasersteifigkeit von mindestens 200 Gpa aufweisen.

8. Fahrradrahmenelement oder Sattelstützrohr nach Anspruch 7, **dadurch gekennzeichnet, dass** die Torsionsfasern (14, 16) eine Fasersteifigkeit von mindestens 250 Gpa, vorzugsweise mindestens 500 Gpa aufweisen.

9. Fahrradrahmenelement oder Sattelstützrohr nach Anspruch 7 oder 8, **dadurch gekennzeichnet, dass** die Torsionsfasern (14, 16) zumindest teilweise Kohlenstofffasern sind.

10. Fahrradrahmenelement oder Sattelstützrohr nach einem der Ansprüche 7 - 9, **dadurch gekennzeichnet, dass** die Torsionsfasern (14, 16) zur Längsrichtung (18) einen Winkel von 45° ± 10°, insbesondere einen Winkel von 45° ± 5° aufweisen.

11. Fahrradrahmenelement oder Sattelstützrohr nach einem der Ansprüche 1 - 10, **dadurch gekennzeichnet, dass** die Biegefasern (12) ausschließlich im Bereich (28, 30) einer sich in Fahrradrahmenlängsrichtung (26) erstreckenden Mittelebene (24) angeordnet sind.

12. Fahrradrahmenelement oder Sattelstützrohr nach Anspruch 11, **dadurch gekennzeichnet, dass** die Biegefasern in den Bereichen (28, 30) zur Mittelebene (24) in einem Winkel von ± 45°, insbesondere ± 25° vorgesehen sind.

13. Fahrradrahmenelement oder Sattelstützrohr nach Anspruch 11 oder 12, **dadurch gekennzeichnet, dass** die Biegefasern, bezogen auf die Mittelebene (24), in Umfangsrichtung des Fahrradrahmenelements (10) bzw. des Sattelstützrohrs (22) in einem Bereich (28, 30) von ± 1 cm bis ± 1,5 cm angeordnet sind.

14. Fahrradrahmenelement oder Sattelstützrohr nach einem der Ansprüche 1 - 13, **dadurch gekennzeichnet, dass**, bezogen auf die Fahrradlängsrichtung (26), in seitlichen Bereichen (32) Versteifungsfasern vorgesehen sind, die eine Fasersteifigkeit von mindestens 200 Gpa, insbesondere mindestens 250 Gpa und besonders bevorzugt mindestens 500 Gpa aufweisen.
